Europäisches Patentamt

**European Patent Office**

**Office européen des brevets**

(11) Veröffentlichungsnummer: **0 322 468**

**A1**

(12) # EUROPÄISCHE PATENTANMELDUNG

(21) Anmeldenummer: **87119200.1**

(22) Anmeldetag: **24.12.87**

(51) Int. Cl.⁴: **G01D 11/24 , G01D 11/30**

(43) Veröffentlichungstag der Anmeldung:
**05.07.89 Patentblatt 89/27**

(84) Benannte Vertragsstaaten:
**DE GB IT**

(71) Anmelder: **Tokyo Compass MFG. Co., Ltd.
15-12, Higashi-Komagata 1-chome
Sumida-ku
Tokyo 130(JP)**

(72) Erfinder: **Yusa, Toshikazu
No. 8-15 Ohyama-cho shibuya-ku
Tokyo 151(JP)**

(74) Vertreter: **Hassler, Werner, Dr.
Postfach 17 04 Asenberg 62
D-5880 Lüdenscheid(DE)**

(54) **Gehäuse mit mehreren Instrumenten.**

(57) Ein Gehäuse (1) mit mehreren Instrumenten (24, 27, 28, 29). Das technische Problem ist eine solche Ausbildung des Gehäuses, daß verschiedenartige Instrumente ohne zusätzliche Halteelemente einbaubar sind und daß das Gehäuse in vielfältiger Weise verwendbar ist. Dabei weist das Gehäuse eine Frontschale (2) mit runden Öffnungen (3, 4) zum Einsetzen von Instrumenten und eine Rückenschale (5) mit weiteren Öffnungen (14) für Instrumente auf, und die Frontschale und die Rückenschale sind lösbar miteinander verbindbar.

Fig.1

EP 0 322 468 A1

## Gehäuse mit mehreren Instrumenten

Die Erfindung betrifft ein Gehäuse mit mehreren Instrumenten.

Bei einem derartigen Gehäuse ist die Verbindung mit den Instrumenten vergleichsweise kritisch. In ein solches Gehäuse sollen verschiedenartige Instrumente einbaubar und auch austauschbar sein. Bei den Instrumenten kann es sich um Höhenmesser, Barometer, Kugelkompasse, ebene Kompasse, Thermometer, Hgyrometer, Uhren, insbesondere Digitaluhren, Radios, Taschenlampen, Heliographiespiegel und andere Instrumente handeln.

Aufgabe der Erfindung ist eine solche Ausbildung des Gehäuses, daß verschiedenartige Instrumente ohne zusätzliche Halteelemente einbaubar sind und daß das Gehäuse in vielfältiger Weise verwendbar ist.

Diese Aufgabe wird nach der Erfindung durch ein Gehäuse gelöst, wobei das Gehäuse eine Frontschale mit runden Öffnungen zum Einsetzen von Instrumenten und eine Rückenschale mit weiteren Öffnungen für Instrumente aufweist und wobei die Frontschale und die Rückenschale lösbar miteinander verbindbar sind.

Die Erfindung unterscheidet sich insofern vom Stand der Technik, als die Instrumente in die Öffnungen eingesetzt werden können. Die Instrumente werden durch Reibschluß und/oder Formschluß gehalten. Das zweischalige Gehäuse wird durch Schrauben zusammengehalten und hält dabei die Instrumente fest. Das Gehäuse hat im wesentlichen eine Rechteckform.

Um ein Instrument gegenüber dem Gehäuse genau auszurichten, ist vorgesehen, daß der Mantel eines Instrumentes eine Ringstufe zur Anla ge an der runden Öffnung der Frontschale aufweist.

Eine Möglichkeit der Lagefixierung der Instrumente liegt darin, daß an der Rückenschale Auflagen für je ein Instrument in Ausrichtung auf die Öffnung an der Frontschale vorgesehen sind.

Beosnders einfach lassen sich kugelförmige Instrumente dadurch halten, daß ein kugelförmiges Instrument zwischen dem Rand der runden Öffnung und einer Auflage an der Rückenschale gehalten ist.

Eine Halterung durch Reibschluß wird dadurch erzielt, daß an die runde Öffnung ein geschlitzter Haltemantel zur klemmenden Festhaltung eines Instruments angesetzt ist.

Eine Ausrichtung der Instrumente in Umfangsrichtung ist dadurch möglich, daß am Instrumentenrand axiale Verzahnungsabschnitte angeordnet sind, die mit entsprechenden Verzahnungsabschnitten am Rand der runden Öffnung zusammenwirken und eine Verdrehsicherung des Instruments sicherstellen.

Instrumente lassen sich entnehmbar dadurch festhalten, daß in der Rückenschale eine Einschubtasche mit Führungsstegen zur Aufnahme eines Einschubinstruments mit entsprechenden Führungsschlitzen vorgesehen ist.

Eine Sicherung wird dadurch erzielt, daß die Einschubtasche ein Rastelement aufweist, das mit einer Gegenraste des Einschubinstruments zusammenwirkt.

Eine Halterung des Gehäuses wird dadurch ermöglicht, daß mit der Rückenschale der erste Schenkel eines Klappfußes verbindbar ist und daß der zweite gelenkig angesetzte Schenkel des Klappfußes zur Halterung bzw. Abstützung des Gehäuses dient.

Eine lösbare Halterung des Klappfußes wird dadurch möglich, daß der erste Schenkel mit Rastzungen in Öffnungen der Rückenschale eingreift.

Die Halterung wird dadurch verbessert, daß mindestens ein Teil der Rastzungen Hinterschneidungskanten aufweist.

Ein zusätzliches Instrumenr läßt sich dadurch unterbringen, daß der zweite Schenkel des Klappfußes einen Heliographiespiegel aufnimmt.

Eine feste Halterung des Gehäuses auf einem Tisch oder dergleichen wird dadurch möglich, daß eine Halteplatte Führungsschlitze für den zweiten Schenkel des Klappfußes aufweist.

Eine Ausführungsform der Erfindung wird im folgenden unter Bezugnahme auf die anliegenden Zeichnungen erläutert, in denen darstellen:

Fig. 1 eine Ansicht auf die Frontschale des Gehäuses,

Fig. 2 einen Schnitt nach der Linie II-II in Fig. 1,

Fig. 3 einen Schnitt nach der Linie III-III in Fig. 1,

Fig. 4 eine Ansicht der Rückenschale,

Fig. 5 eine Seitenansicht zu Fig. 4 mit angesetztem Klappfuß,

Fig. 6 eine Einzelansicht eines Einschubinstruments,

Fig. 7 eine Draufsicht auf den Klappfuß,

Fig. 8 eine Draufsicht auf eine Halteplatte und

Fig. 9 eine Seitenansicht zu Fig. 8.

Das in den Figuren dargestellte Gehäuse 1 hat im wesentlichen eine Rechteckform und besteht aus einer Frontschale 2 mit mehreren runden Öffnungen 3, 4 sowie einer Rückenschale 5. Die Frontschale 2 und die Rückenschale 5 weisen überlappende Stirnränder 6 auf, die ineinandergreifen. In den Eckbereichen sind Verbindungsschrauben 7 angeordnet, die in die Rückenschale 5 eingeschraubt sind. Die Rückenschale 5 besitzt an der Innenseite Aufnahmen 8, die zentrierend über Hülsen 9 greifen, die jeweils an der Innenseite der Frontschale 2 angeformt sind und in die die betreffenden Verbindungsschrauben 7 selbstschneidend eingreifen.

Die Öffnung 3 hat einen vergleichsweise großen Durchmesser. Innerhalb der Öffnung 3 ist eine Ringstufe 10 ausgebildet, die an ihrer Umfangswandung axiale Verzahnungsabschnitte 11 aufweist. An die Ringstufe 10 schließt sich ein Haltemantel 12 an, der über den Umfang verteilt mehrere axiale Schlitze aufweist (nicht dargestellt), damit der Haltemantel 12 eine höhere Nachgiebigkeit hat.

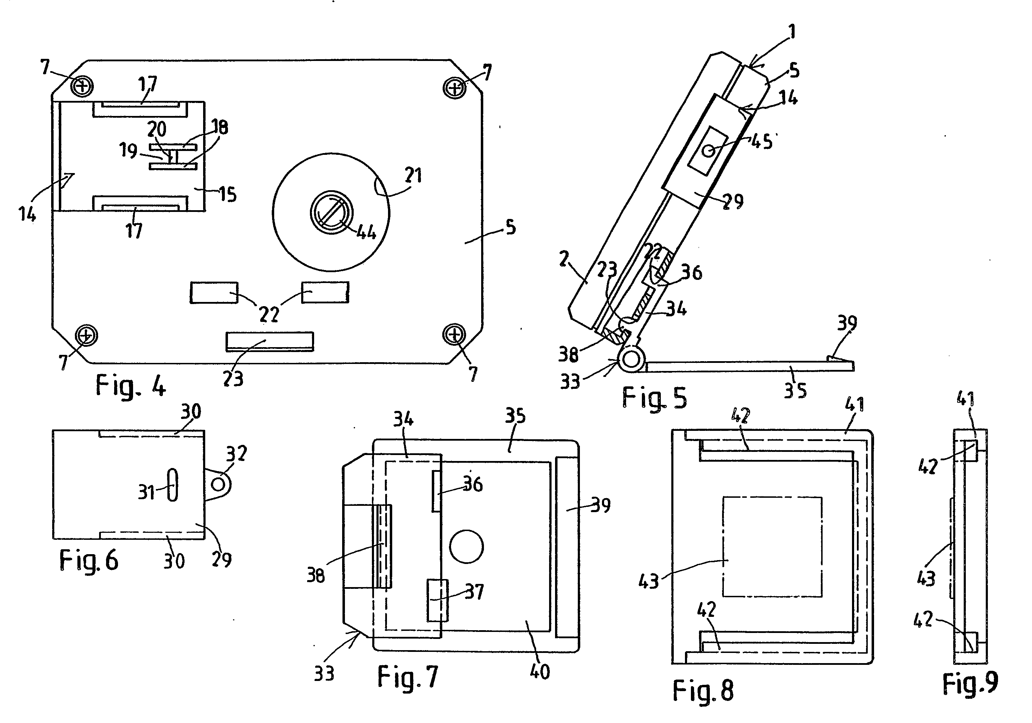

Die Öffnungen 4 sind als kreisförmige Durchgänge ausgebildet. Auf die Öffnungen 4 ausgerichtet können sich in der Rückenschale 5 unterschiedliche Auflageelemente befinden. Man kann z. B. eine ringförmige Auflage 13 vorsehen. In anderer Weise kann man innerhalb der Rückenschale 5 eine Kammer 14 mit einer Deckwand 15 und Seitenwänden 16 ausbilden. Die Deckwand 15 dient als Auflage gegenüber einer Öffnung 4. Die Seitenwände 16 weisen Führungsstege 17 auf. Ferner ist in der Deckwand 15 innerhalb eines durch Schlitze 18 freigetrennten Streifens 19 ein Raststeg 20 ausgebildet, der aus der Fläche der Deckwand 15 vorsteht, so daß der Raststeg 20 nachgeben kann. Schließlich ist in der Rückenschale 5 eine Öffnung 21 ausgebildet, die für noch zu beschreibende Zwecke dient. Die Rückenschale weist drei Schlitze 22 und 23 auf, die in der aus Fig. 4 ersichtlichen Weise angeordnet sind.

Die Öffnung 3 mit vergleichsweise großem Durchmesser dient zur Aufnahme eines Instruments 24, das als Barometer und/oder Höhenmesser dargestellt ist. Man kann auch ein Radio, einen Rekorder, eine Uhr oder ein ähnliches Instrument einsetzen. Das Instrument 24 hat einen zylindrischen Außenmantel und weist eine Ringstufe 25 auf, die an der Ringstufe 10 Anlage findet. An der Ringwand im Anschluß an die Ringstufe 25 befinden sich ebenfalls axiale Verzahnungsabschnitte 26, die in die Verzahnungsabschnitte 11 passen und beim Einsetzen des Instrumentes 24 die umfangsmäßige Ausrichtung desselben ermöglichen. Der Haltemantel 12 ist klemmend ausgebildet. Zum Beispiel ist der Haltemantel konisch geformt, so daß das Instrument 24 klemmend festgehalten wird. Die genannten Schlitze des Haltemantels 12 erhöhen die Nachgiebigkeit desselben und damit die Haltekraft. Man kann das Instrument zusätzlich durch Rastelemente festhalten.

Die Öffnungen 4 dienen einerseits zur Aufnahme eines runden, scheibenförmigen Instruments 27, z. B. eines Thermometers, eines ebenen Kompasses, einer kleineren Uhr oder dergleichen. Dieses Instrument 27 findet an der Deckwand 15 der Rückenschale 5 Anlage.

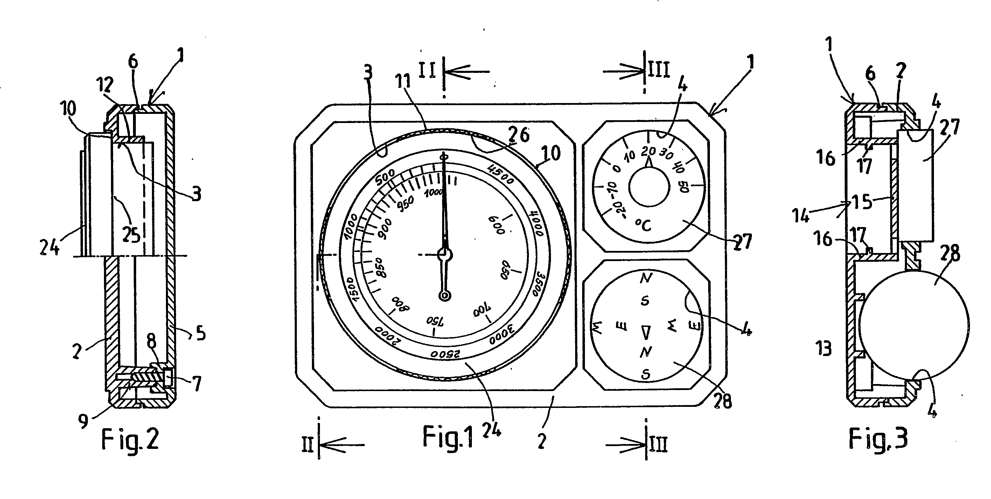

Die andere Öffnung 4 dient zur Aufnahme eines kugelförmigen Instruments 28, z. B. eines Kugelkompasses. Das Instrument 28 findet an der Auflage 13 der Rückenschale 5 Anlage und ist durch den Rand der Öffnung 4 festgehalten, wie man dies insbesondere aus Fig. 3 erkennen kann.

Die Kammer 14 dient als Einschubtasche für ein Einschubinstrument 29, z. B. eine Taschenlampe. Die Taschenlampe 29 hat ein Rechteckgehäuse und in ihren Seitenwänden Führungsschlitze 30, die über die Führungsstege 17 passen. Eine Vertiefung 31 wirkt mit dem Raststeg 20 zusammen. Ein ösenförmiger Ansatz 32 ermöglicht das Aufhängen des Einschubinstruments 29 an einem Band, einer Schlaufe, einer kette oder dergleichen. Eine Lichtquelle 45 des Einschubinstruments 29 befindet sich etwa dem Ansatz 32 gegenüber.

Zur Festhaltung des Gehäuses dient ein Klappfuß 33, der zwei gelenkig miteinander verbunden Schenkel 34 und 35 umfaßt. An dem ersten Schenkel 34 sitzen drei Rastzungen 36, 37, 38, die auf die Schlitze 22, 23, ausgerichtet sind. Die Rastzungen 37 und 38 weisen Hinterschneidungen auf, während die Rastzunge 36 im wesentlichen stegförmig ausgebildet ist und vor allem zur Zentrierung und Ausrichtung des ersten Schenkels 34 dient. Der zweite Schenkel 35 weist eine Klemmkante 39 auf, die zum Beispiel zur Festlegung an einem Gürtel oder an einem anderen Halteband dient. Außerdem ist der zweite Schenkel 35 zur Aufnahme eines Heliographispiegels 40 bestimmt.

Schließlich ist nach den Fig. 8 und 9 eine Halteplatte 41 vorgesehen, die Führungen 42 zum Einschieben des zweiten Schenkels 35 des Klappfußes 33 aufweist. An der Unterseite der Halteplatte 41 ist eine Selbstklebefolie 43 angeordnet, die zur Befestigung der Halteplatte 41 an einer Tischplatte oder dergleichen dient.

Der Zusammenhalt des Gehäuses 1 mit den Instrumenten 24, 27, 28, 29 ergibt sich aus der vorstehenden Beschreibung sowie aus der Darstellung der Figuren. Das Instrument 24 ist in der beschriebenen Weise klemmend oder rastend in der Öffnung 3 gehalten und außerdem durch die Verzahnungsabschnitte in Umfangsrichtung gesichert, so daß sich das Instrument 24 nicht verdrehen kann. Die Öffnung 21 in der Rückenschale 5 ermöglicht einen Zugang zu der Rückseite des Instruments, damit man eine Einstellvorrichtung 24 betätigen kann. Die Einstellvorrichtung kann zur Justierung des Instruments dienen. Es kann sich auch um einen Schalter oder eine andere Schaltvorrichtung handeln.

Das Einschubinstrument 29 bzw. die Taschenlampe kann in eingeschobenem Zustand betätigt werden, indem die Lichtquelle 45 eingeschaltet wird. In anderer Weise kann man zum Gebrauch das Einschubinstrument 29 aus der Rückenschale 5 herausnehmen und dasselbe gesondert benutzen. Das Einschubinstrument 29 kann an dem ösenförmigen Ansatz 32 aufgehängt werden.

Der Klappfuß 33 hat zahlreiche Funktionen. Der Klappfuß 33 kann als Halter für das Gehäuse benutzt werden, indem die beiden Schenkel 34 und 35 über ein Band, z. B. einen Gürtel, geschoben werden und der zweite Schenkel 35 auf die Rückseite der Rückenschale 5 geklappt wird. Dadurch ist der Gürtel zwischen den beiden Schenkeln eingeklemmt, so daß dadurch das Gehäuse festgehalten wird. So kann das Gehäuse mit den Instrumenten beim Wandern, Klettern, Jagen und anderen Betätigungen am Gürtel mitgeführt werden. In anderer Weise kann man auch in aufgestelltem Zustand gemäß Fig. 5 den zweiten Schenkel 35 in die Halteplatte 41 einschieben und dadurch das Gehäuse auf einer Tischplatte, z. B. einem Schreibtisch oder einem Arbeitstisch, anbringen. Die Neigung des Gehäuses 1 kann nach Wunsch eingestellt werden. Man kann auch den Klappfuß 33 aus den Rastungen lösen und abnehmen, wenn das Gehäuse in die Tasche gesteckt werden soll oder wenn der Heliographiespiegel 40 benutzt werden soll.

**Ansprüche**

1. Gehäuse (1) mit mehreren Instrumenten (24, 27, 28, 29), wobei das Gehäuse eine Frontschale (2) mit runden Öffnungen (3, 4) zum Einsetzen von Instrumenten und eine Rückenschale (5) mit weiteren Öffnungen (14) für Instrumente aufweist und wobei die Frontschale und die Rückenschale lösbar miteinander verbindbar sind.

2. Gehäuse nach Anspruch 1, dadurch gekennzeichnet, daß der Mantel eines Instrumentes (24) eine Ringstufe (25) zur Anlage an der runden Öffnung (3) der Frontschale (2) aufweist.

3. Gehäuse nach Anspruch 1 oder 2, dadurch gekennzeichnet, daß an der Rückenschale (5) Auflagen (15, 23) für je ein Instrument (27, 28) in Ausrichtung auf die Öffnung (4) an der Frontschale (2) vorgesehen sind.

4. Gehäuse nach einem der Ansprüche 1 bis 3, dadurch gekennzeichnet, daß ein kugelförmiges Instrument (28) zwischen dem Rand der runden Öffnung (4) und einer Auflage (13) an der Rückenschale (5) gehalten ist.

5. Gehäuse nach einem der Ansprüche 1 bis 4, dadurch gekennzeichnet, daß an die runde Öffnung (3) ein geschlitzter Haltemantel (12) zur klemmenden Festhaltung eines Instruments (24) angesetzt ist.

6. Gehäuse nach Anspruch 5, dadurch gekennzeichnet, daß am Instrumentenrand (24) axiale Verzahnungsabschnitte (26) angeordnet sind, die mit entsprechenden Verzahnungsabschnitten (11) am Rand der runden Öffnung (3) zusammenwirken und eine Verdrehsicherung des Instruments (24) sicherstellen.

7. Gehäuse nach einem der Ansprüche 1 bis 6, dadurch gekennzeichnet, daß in der Rückenschale eine Einschubtasche (14) mit Führungsstegen (17) zur Aufnahme eines Einschubinstruments (29) mit entsprechenden Führungsschlitzen (30) vorgesehen ist.

8. Gehäuse nach Anspruch 7, dadurch gekennzeichnet, daß die Einschubtasche (14) ein Rastelement (20) aufweist, das mit einer Gegenraste (31) des Einschubinstruments (29) zusammenwirkt.

9. Gehäuse nach einem der Ansprüche 1 bis 8, dadurch gekennzeichnet, daß mit der Rückenschale (5) der erste Schenkel (34) eines Klappfußes (33) verbindbar ist und daß der zweite gelenkig angesetzte Schenkel (35) des Klappfußes zur Halterung bzw. Abstützung des Gehäuses (1) dient.

10. Gehäuse nach Anspruch 9, dadurch gekennzeichnet, daß der erste Schenkel (34) mit Rastzungen (36, 37, 38) in Schlitze (22, 23) der Rückenschale (5) eingreift.

11. Gehäuse nach Anspruch 10, dadurch gekennzeichnet, daß mindestens ein Teil der Rastzungen (37, 38) Hinterschneidungskanten aufweist.

12. Gehäuse nach einem der Ansprüche 9 bis 11, dadurch gekennzeichnet, daß der zweite Schenkel (35) des Klappfußes einen Heliographiespiegel (40) aufnimmt.

13. Gehäuse nach einem der Ansprüche 9 bis 12, dadurch gekennzeichnet, daß eine Halteplatte (41) Führungen (42) für den zweiten Schenkel (35) des Klappfußes (33) aufweist.

Fig.2

Fig.1

Fig.3

EP 0 322 468 A1

Fig. 4

Fig. 5

Fig. 6

Fig. 7

Fig. 8

Fig. 9

EP 0 322 468 A1

Tokyo Compass

A 87203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 694 069 (AEG)<br>* Seite 2, Zeilen 1-24; Figuren *<br>--- | 1,3 | G 01 D 11/24<br>G 01 D 11/30 |
| A | US-A-3 888 127 (FARALLON INDUSTRIES)<br>* Spalte 8, Zeile 51 - Spalte 9, Zeile 25; Figuren *<br>--- | 1-3 | |
| A | DE-A-3 325 888 (A. HOHN)<br>* Seite 7, Absatz 3; Figuren *<br>--- | 1-3 | |
| A | US-A-4 197 747 (C.I. KOEHLER)<br>* Spalte 2, Zeile 4 - Spalte 3, Zeile 20; Figuren 1-4 *<br>--- | 1,3,4 | |
| A | DE-A-2 937 641 (J. BAUSER)<br>* Figuren *<br>--- | 3,6,8 | |
| A | DE-A-1 640 366 (HOEL & GUNZLER)<br>* Figuren *<br>--- | 5,6 | |
| A | DE-A-3 319 406 (MÜLLER & WEIGERT)<br>* Figuren *<br>--- | 7 | RECHERCHIERTE SACHGEBIETE (Int. Cl.4) |
| A | DE-A-3 511 605 (CREATEC)<br>* Figuren *<br>--- | 9 | G 01 W<br>G 01 C<br>G 01 D |
| A | DE-A-3 339 613 (VDO A. SCHINDLING)<br>* Figuren; Seite 8, Zeilen 19-23 *<br>----- | 9-11 | |

Der vorliegende Recherchenbericht wurde für alle Patentansprüche erstellt

| Recherchenort | Abschlußdatum der Recherche | Prüfer |
|---|---|---|
| DEN HAAG | 06-09-1988 | RAMBOER P. |